# EUROPÄISCHE PATENTSCHRIFT

(11) **EP 2 262 854 B1**
(45) Veröffentlichungstag und Bekanntmachung des Hinweises auf die Patenterteilung: **08.02.2012**
(21) Anmeldenummer: 09728080.4
(22) Anmeldetag: 30.03.2009
(51) Int. Cl.: C08K 5/00, C08K 5/5333, C09K 5/00, C09K 21/12, C08K 3/04, C08K 5/02, C08L 25/04

(54) **FLAMMGESCHÜTZTE THERMOPLASTISCHE FORMMASSEN**
FLAME-RETARDANT THERMOPLASTIC COMPOSITIONS
MATÉRIAUX DE MOULAGE THERMOPLASTIQUES IGNIFUGÉS

(30) Priorität: 01.04.2008 EP 08153885
(43) Veröffentlichungstag der Anmeldung: 22.12.2010
(73) Patentinhaber: Styrolution GmbH, 67056 Ludwigshafen (DE)
(72) Erfinder: STAAL, Maarten, Durham NC 27703 (US); CHAROENSIRISOMBOON, Piyada, 68165 Mannheim (DE)
(74) Vertreter: Jacobi, Markus Alexander
(86) Internationale Anmeldenummer: PCT/EP2009/053702
(87) Internationale Veröffentlichungsnummer: WO 2009/121821

(56) Entgegenhaltungen:
- EP-A- 1 207 183
- WO-A-00/34367
- WO-A-2005/103136

## Beschreibung

Die Erfindung betrifft thermoplastische Formmassen enthaltend
A) 39 bis 99 Gew.-% mindestens eines thermoplastischen Polymers,
B) 1 bis 60 Gew.-% einer Flammschutzmittelkomponente enthaltend
   20 bis 79,99 Gew.-% der Komponente B1) eine Verbindung der Formel (I), 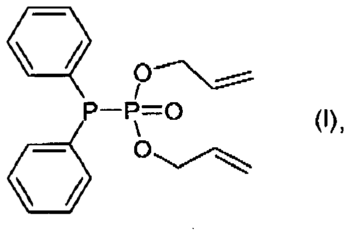
   20 bis 79,99 Gew.-% der Komponente B2) eines expandierbaren Graphits und
   0,01 bis 4 Gew.-% der Komponente B3) eines fluorhaltigen Polymers
   wobei die Gewichtsprozente jeweils auf das Gesamtgewicht der Komponenten B1) bis B3) bezogen sind und zusammen 100 Gew.-% ergeben.
      und
C) 0 bis 60 Gew.-% weiterer Zusatzstoffe,
wobei die Gewichtsprozente jeweils auf das Gesamtgewicht der Komponenten A) bis C) bezogen sind und zusammen 100 Gew.-% ergeben.

Außerdem betrifft die vorliegende Erfindung Verfahren zur Herstellung derartiger Formmassen, die Verwendung derartiger Formmassen zur Herstellung von Formkörpern, Fasern, Schäumen und Folien sowie die hierbei erhältlichen Formkörpern, Fasern, Schäume und Folien, und weiterhin die Verwendung der Verbindung der Formel (I) als Flammschutzmittel für thermoplastische Polymere.

Für thermoplastische Polymere sind eine Vielzahl flammhemmend wirkender Additive bekannt. Vorteilhaft sind halogenfreie bzw. halogenarme Flammschutzmittel, da diese im Brandfall u.a. weniger toxische Brandgase freisetzen. Als halogenfreie Flammschutzmittel werden in der Literatur beispielsweise eine Vielzahl unterschiedlicher Phosphorverbindungen beschrieben.

Halogenfrei flammgeschützte thermoplastische Kunststoffe, die expandierbaren Graphit und eine Phosphorverbindung als Flammschutzkomponenten enthalten werden in WO 00/34367 und WO 00/34342 offenbart. Solcherart flammgeschützte Formmassen sind bzgl. ihres Brennverhaltens, insbesondere bzgl. des Abtropfverhaltens im Brandfall, aber verbesserungswürdig.

WO 2005/103136 offenbart flammgeschützte Thermoplaste, die neben expandierbarem Graphit und einer Phosphorverbindung ein weiteres Coadditiv enthalten, welches die Migration des phosphorhaltigen Flammschutzmittels an die Polymeroberfläche unterdrücken soll. Explizit als Coadditiv genannt wird Polycarbonat.

Die KR1996-0001006 offenbart flammgeschützte Thermoplaste, wobei die Flammschutzmittelkomponenten expandierbaren Graphit, eine Phosphorverbindung und Tef-Ion umfassen. Die mittlere Teilchengröße des expandierbaren Graphits beträgt 5 µm. Das als Antitropfmittel zugesetzte Teflon wird in Mengen von 1 bis 5 Gewichtsprozent eingesetzt. Die so erhaltenen halogenfrei flammgeschützten Formmassen besitzen eine gute Wärmebeständigkeit und Stoßfestigkeit.

Aufgabe der vorliegenden Erfindung war es , für thermoplastische Kunststoffe eine halogenfreie bzw. halogenarme Flammschutzmittelkombination zu finden, die gegenüber bekannten Systemen verbesserte flammhemmende und/oder mechanische Eigenschaften besitzt.

Demgemäß wurden die eingangs definierten Formmassen gefunden, die eine Flammschutzmittelkomponente enthaltend eine Verbindung der Formel (I) 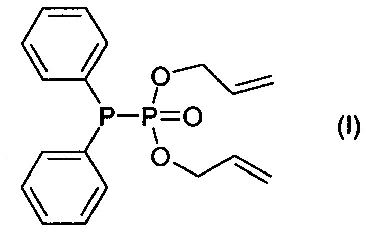 umfassen.

Die erfindungsgemäßen thermoplastischen Formmassen weisen ggü. bekannten halogenfrei bzw. halogenarm flammgeschützten Thermoplasten verbesserte flammhemmende und/oder mechanische Eigenschaften auf.

Die erfindungsgemäßen Formmassen sowie die weiteren erfindungsgemäßen Verfahren und Verwendungen werden im folgenden beschrieben.

Die erfindungsgemäßen Formmassen enthalten
A) 39 bis 99 Gew.-%, bevorzugt 50 bis 95 Gew.-%, besonders bevorzugt 65 bis 90 Gew.-%, Komponente A,
B) 1 bis 60 Gew.-%, bevorzugt 5 bis 40 Gew.-%, besonders bevorzugt 10 bis 35 Gew.-%, Komponente B, und
C) 0 bis 60 Gew.-%, bevorzugt 0 bis 45 Gew.-%, besonders bevorzugt 0 bis 25 Gew.-% Komponente C,
wobei die Gewichtsprozente jeweils auf das Gesamtgewicht der Komponenten A) bis C) bezogen sind und zusammen 100 Gew.-% ergeben.

Die Flammschutzmittelkomponente B) umfasst
B1) 20 bis 79,99 Gew.-%, bevorzugt 30 bis 69,9 Gew.-%, besonders bevorzugt 40 bis 59,5 Gew.-%, der Komponente B1),
B2) 20 bis 79,99 Gew.-%, bevorzugt 30 bis 69,9 Gew.-%, besonders bevorzugt 40 bis 59,5 Gew.-%, der Komponente B2) und
B3) 0,01 bis 4 Gew.-%, bevorzugt 0,1 bis 3 Gew.-%, besonders bevorzugt 0,5 bis 2 Gew.-%, der Komponente B3),
wobei die Gewichtsprozente jeweils auf das Gesamtgewicht der Komponenten B1) bis B3) bezogen sind und zusammen 100 Gew.-% ergeben.

### Komponente A):

Als Komponente A) der thermoplastischen Formmassen sind grundsätzlich alle dem Fachmann bekannten und in der Literatur beschriebenen thermoplastischen Polymere geeignet (ausgenommen fluorhaltige Polymere gemäß Komponente B3)).

Insbesondere als Komponente A) geeignet sind Polyethylen (PE), Polypropylen (PP), Polyvinylchlorid (PVC), Polystyrol (PS), schlagfest modifiziertes Polystyrol (HIPS), Styrol-Acrylnitril-Copolymere (SAN), Acrylnitril-Styrol-Acrylat-Copolymere (ASA), Acrylnitril-Butadien-Styrol-Copolymere (ABS), Methacrylat-Acrylnitril-Butadien-StyrolCopolymere (MABS), Styrol-Butadien-Blockcopolymere (SBC), Polyamid (PA), Polyethylenterephthalat (PET), Polyethylenterephthalatglycol (PETG), Polybutylenterephthalat (PBT), Polyoxymethylen (POM), Polycarbonat (PC), Polymethylmethacrylat (PMMA), Poly(ether)sulfone (PES), thermoplastisch verarbeitbares Polyurethan (TPU), Polyphenylenoxid (PPO), schäumbares und/oder geschäumtes Polystyrol (EPS), schäumbares und/oder geschäumtes Polypropylen oder eine Mischung aus zwei oder mehreren dieser Polymere.

Besonders bevorzugte Komponente A) ist Polyethylen (PE), Polypropylen (PP) oder eine Mischung aus diesen Polymeren.

Besonders bevorzugte Komponente A) ist Polyvinylchlorid (PVC).

Besonders bevorzugte Komponente A) ist Polystyrol (PS), schlagfest modifiziertes Polystyrol (HIPS) oder eine Mischung aus diesen Polymeren.

Besonders bevorzugte Komponente A) ist Styrol-Acrylnitril-Copolymer (SAN).

Besonders bevorzugte Komponente A) ist Acrylnitril-Butadien-Styrol-Copolymer (ABS).

Besonders bevorzugte Komponente A) ist Methacrylat-Acrylnitril-Butadien-Styrol-Copolymer (MABS).

Besonders bevorzugte Komponente A) ist Styrol-Butadien-Blockcopolymer (SBC).

Besonders bevorzugte Komponente A) ist Polyamid (PA).

Besonders bevorzugte Komponente A) ist eine Mischung aus Acrylnitril-Butadien-Styrol-Copolymeren (ABS) und Polyamid (PA).

Besonders bevorzugte Komponente A) ist Polyethylenterephthalat (PET), Polyethylenterephthalatglycol (PETG), Polybutylenterephthalat (PBT) oder eine Mischung aus diesen Polymeren.

Besonders bevorzugte Komponente A) ist Polyoxymethylen (POM).

Besonders bevorzugte Komponente A) ist Polycarbonat (PC).

Besonders bevorzugte Komponente A) ist eine Mischung aus Acrylnitril-Styrol-Acrylat-Copolymeren (ASA) und Polycarbonat (PC).

Besonders bevorzugte Komponente A) ist eine Mischung aus Acrylnitril-Butadien-Styrol-Copolymeren (ABS) und Polycarbonat (PC).

Besonders bevorzugte Komponente A) ist eine Mischung aus Styrol-Acrylnitril-Copolymeren (SAN) und Polycarbonat (PC).

Besonders bevorzugte Komponente A) ist Polymethylmethacrylat (PMMA).

Besonders bevorzugte Komponente A) ist Poly(ether)sulfone (PES).

Besonders bevorzugte Komponente A) ist thermoplastisch verarbeitbares Polyurethan (TPU).

Besonders bevorzugte Komponente A) ist Polyphenylenoxid (PPO).

Besonders bevorzugte Komponente A) ist schäumbares und/oder geschäumtes Polystyrol (EPS).

Besonders bevorzugte Komponente A) ist schäumbares und/oder geschäumtes Polypropylen.

Die genannten Polymere und ihre Herstellung sind dem Fachmann bekannt, in der Literatur beschrieben (beispielsweise in A. Echte, Handbuch der technischen Polymerchemie, VCH Verlagsgesellschaft, Weinheim, 1993; und Saechtling, Kunststoff Taschenbuch, Carl Hanser Verlag, München, 29. Ausgabe, 2004) und die genannten Polymere sind kommerziell verfügbar.

### Komponente B):

Die thermoplastischen Formmassen enthalten als Flammschutzmittelkomponente B) erfindungsgemäß die bereits oben genannten Komponenten und Mischungen umfassend B1) und B2) und B3) in den ebenfalls bereits beschriebenen Mengenanteilen. Dabei ist:
B1) eine Verbindung der Formel (I),
B2) ein expandierbarer Graphit,
B3) ein fluorhaltiges Polymer.

Die erfindungsgemäßen Formmassen enthalten als Komponente B1) eine Verbindung der Formel (I):

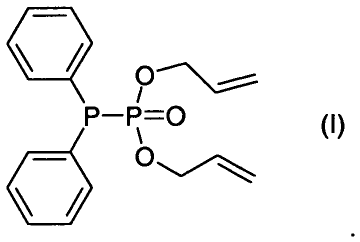

Die Verbindung der Formel (I) kann wie folgt hergestellt werden:
Triallylphosphit (101 g , entsprechend 0,5 mol, kommerziell verfügbar bei ABCR GmbH & Co. KG, Karlsruhe) wird in Toluol (500 ml) in einem Rührkolben vorgelegt. Innerhalb einer Stunde wird P-Chlor-diphenylphosphin (110,5 g, entsprechend 0,5 mol, kommerziell verfügbar bei Sigma-Aldrich Laborchemikalien GmbH, Seelze) bei 25 °C zugetropft. Es wird 7 Stunden unter Rückfluss nachgerührt und anschließend abgekühlt. Toluol wird über eine Claisenbrücke bei 60°C und 1 mbar abdestilliert. Es wird bei Ölpumpenvakuum getrocknet. Das Produkt (147 g, 85 % Ausbeute), die Verbindung der Formel (I), wird als gelbe klare Flüssigkeit mit einer Reinheit > 80 % (gemäß 31 P NMR (Toluol-D8): -31.1 (d, 1J 204 Hz); 34.1 (d, 1J 204 Hz)) erhalten.

Die Verbindung der Formel (I) ist besonders gut zur Verwendung als Flammschutzmittel in thermoplastischen Polymeren gemäß Komponente A) geeignet. Insbesondere ist die Verbindung der Formel (I) in den oben beschriebenen besonders bevorzugten Komponenten A) als Flammschutzmittel zu verwenden.

Die erfindungsgemäßen Formmassen enthalten als Komponente B2) dem Fachmann bekannten und in der Literatur beschriebenen expandierbaren Graphit, sogenannten Blähgraphit (wärme- bzw. hitzeexpandierbarer Graphit). Dieser leitet sich in der Regel von natürlichem oder künstlichem Graphit ab.

Der Blähgraphit ist beispielsweise erhältlich durch Oxidation von natürlichem und/oder künstlichem Graphit. Als Oxidationsagentien können H₂O₂ oder Salpetersäure in Schwefelsäure eingesetzt werden.

Weiterhin kann der Blähgraphit durch Reduktion, z.B. mit Natriumnaphthalenid in einem aprotischen organischen Lösungsmittel hergestellt werden.

Aufgrund seiner Schichtgitterstruktur ist Graphit in der Lage, spezielle Formen von Einlagerungsverbindungen zu bilden. In diesen so genannten Zwischengitterverbindungen sind Fremdatome oder -moleküle in z.T. stöchiometrischen Verhältnissen in die Räume zwischen den Kohlenstoffatomen aufgenommen worden.

Die Oberfläche des Blähgraphits kann zur besseren Verträglichkeit ggü. der Thermoplastmatrix mit einem Beschichtungsmittel beschichtet sein, beispielsweise mit dem Fachmann bekannten Silanschlichten.

Für den Fall, dass der Blähgraphit durch o.g. Oxidation erhalten wurde, kann es notwendig sein, eine alkalische Verbindung zuzusetzen, da der Blähgraphit (durch die enthaltende Säure) ansonsten Korrosion der Formmassen und/oder Lager- und Herstellapparate derartiger Formmassen verursachen kann. Insbesondere Alkaliverbindungen sowie Mg(OH)₂ oder Al-Hydroxide können in Mengen bis zu 10, vorzugsweise bis zu 5 Gew.-% (bezogen auf 100 Gew.-% B1) zugegeben werden. Vorteilhaft erfolgt die Mischung bevor die Komponenten compoundiert werden.

Vorzugsweise beträgt die Hitze-Ausdehnung des Blähgraphits bei schnellem Aufheizen von Raumtemperatur auf 800°C (in Richtung der c-Achse des Kristalls) mindestens 100 ml/g, vorzugsweise mindestens 110 ml/g (sog. spezifische Volumenänderung).

Wesentlich für die Eignung als Flammschutzmittel ist es, dass der Blähgraphit sich nicht in größerem Ausmaß ausdehnt bei Temperaturen unter 270°C, bevorzugt unter 280°C. Darunter versteht der Fachmann, dass der Blähgraphits bei den genannten Temperaturen in einem Zeitraum von 10 min eine Volumenexpansion von weniger als 20 % erfährt.

Der Ausdehnungskoeffizient (als spezifische Kenngröße) bedeutet in der Regel die Differenz zwischen dem spezifischen Volumen (ml/g) nach Erhitzen und dem spezifischen Volumen bei 20°C Raumtemperatur. Dies wird allgemein gemessen nach folgender Vorschrift: Ein Quarzbehälter wird auf 1000°C in einem elektrischen Schmelzeofen erhitzt. 2 g des Blähgraphits werden schnell in den Quarzbehälter gegeben und dieser 10 sec. im Schmelzeofen belassen.

Das Gewicht von 100 ml des expandierten Graphits wird gemessen, um die sog. "Ioosened apparent specific gravity" zu bestimmen. Der Kehrwert bildet dann das spezifische Volumen bei dieser Temperatur. Das spezifische Volumen bei Raumtemperatur wird entsprechend bei 20°C gemessen. (Ausdehnungskoeffizient = spez. Volumen nach Erhitzen - spezifisches Volumen bei 20°C).

Die mittlere Teilchengröße D₅₀ des expandierbaren Graphits B2) liegt in der Regel zwischen 10 µm und 1000 µm, bevorzugt zwischen 30 µm und 850 µm, insbesondere bevorzugt zwischen 200 µm und 700 µm (die mittlere Teilchengröße D₅₀ und die Teilchengrößenverteilung werden aus der integralen Volumenverteilung bestimmt. Bei den mittleren Teilchengrößen D₅₀ handelt es sich in allen Fällen um das Volumenmittel der Teilchengrößen, wie sie mittels Laserlichtbeugung an einem Malvern-Mastersizer 2000 am Trockenpulver ermittelt werden. Die Laserlichtbeugung liefert die integrale Verteilung des Teilchendurchmessers einer Probe. Hieraus lässt sich entnehmen, wieviel Prozent der Teilchen einen Durchmesser gleich oder kleiner einer bestimmten Größe haben. Der mittlere Teilchendurchmesser D₅₀, der auch als D₅₀-Wert der integralen Volumenverteilung bezeichnet wird, ist dabei als der Teilchendurchmesser definiert, bei dem 50 Gew.-% der Teilchen einen kleineren Durchmesser haben als der Durchmesser, der dem D₅₀-Wert entspricht. Ebenso haben dann 50 Gew.-% der Teilchen einen größeren Durchmesser als der D₅₀-Wert.) Sind die mittleren Teilchengrößen D₅₀ niedriger, wird in der Regel keine ausreichend Flammschutzwirkung erzielt; sind sie größer, werden üblicherweise die mechanischen Eigenschaften der thermoplastischen Formmassen nachteilig beeinflusst.

Die Dichte des Blähgraphits liegt üblicherweise im Bereich von 0,4 bis 2 g/cm³.

Als Komponente B3) enthalten die Formmassen ein von Komponente A) verschiedenes fluorhaltiges Polymer. Bevorzugt sind fluorhaltige Ethylenpolymerisate. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine mittlere Teilchengröße D₅₀ im Bereich von 0,05 bis 10 µm, insbesondere von 0,1 bis 5 µm auf. Diese geringen Teilchengrößen lassen sich besonders bevorzugt durch Verwendung von wässrigen Dispersionen von fluorhaltigen Ethylenpolymerisaten und deren Einarbeitung in eine Polymerschmelze erzielen.

Neben den genannten Komponenten B1), B2) und B3) kann die Flammschutzmittelkomponente B) grundsätzlich weitere flammhemmend wirkende Verbindungen umfassen. Geeignet sind beispielsweise organische und anorganische Phosphor enthaltende Verbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganischen Chemie von A.F. Hollemann und E. Wiberg, Walter des Gruyter und Co. (1964, 57. bis 70. Auflage), Seite 166 bis 177, wiedergegeben ist. Phosphorverbindungen der Wertigkeitsstufen -3 bis +5 leiten sich von Phosphin (-3), Diphosphin (-2), Phosphinoxid (-1), elementarem Phosphor (+0), hypophosphoriger Säure (+1), phosphoriger Säure (+3), Hypodiphosphorsäure (+4) und Phosphorsäure (+5) ab.

Aus der großen Zahl von weiteren flammhemmend wirkenden Verbindungen, insbesondere den anorganischen oder organischen Phosphaten, Phosphiten, Phosphonaten, Phosphatestern, rotem Phosphor und Triphenylphosphinoxid, seien nur einige Beispiele erwähnt.

Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin und Trisnonylphenylphosphin u.a. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a.. Besonders geeignet ist Tetranaphthyldiphosphin.

Phosphorverbindungen der Wertigkeitsstufe -1 leiten sich vom Phosphinoxid ab.

Geeignet sind Phosphinoxide der allgemeinen Formel I' 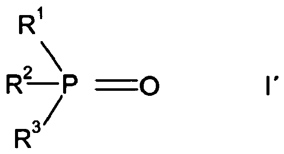 wobei R¹, R² und R³ in Formel I' gleiche oder verschiedene Alkyl-, Aryl-, Alkylaryl- oder Cycloalkylgruppen mit 8 bis 40 C-Atomen bedeuten.

Beispiele für Phosphinoxide sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tris-(cyanoethyl)-phosphinoxid, Benzylbis-(cyclohexyl)-phosphinoxid, Benzylbisphenylphosphinoxid, Phenylbis-(n-hexyl)-phosphinoxid. Bevorzugt sind weiterhin oxidierte Umsetzungsprodukte aus Phosphin mit Aldehyden, insbesondere aus t-Butylphosphin mit Glyoxal. Besonders bevorzugt eingesetzt werden Triphenylphosphinoxid, Tricyclohexlyphosphinoxid, Tris-(n-octyl)-phosphinoxid und Tris-(cyanoethyl)-phosphinoxid, insbesondere Triphenylphosphinoxid.

Ebenso geeignet ist Triphenylphosphinsulfid und dessen wie oben beschriebene Derivate der Phosphinoxide.

Phosphor der Wertigkeitsstufe ±0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite rein organischer Natur, z.B. organische Hypophosphite, wie Cellulosehypophosphitester, Ester der hypophosphorigen Säuren mit Diolen, wie z.B. von 1,10-Dodecyldiol. Auch substituierte Phosphinsäuren und deren Anhydride, wie z.B. Diphenylphosphinsäure, können eingesetzt werden. Des weiteren kommen in Frage Diphenylphosphinsäure, Di-p-Tolylphosphinsäure, Di-Kresylphosphinsäureanhydrid, Es kommen aber auch Verbindungen wie Hydrochinon-, Ethylenglykol-, Propylenglykol-bis(diphenylphosphinsäure)-ester u.a. in Frage. Ferner sind geeignet Aryl(Alkyl)phosphinsäureamide, wie z.B. Diphenylphosphinsäure-dimethylamid und Sulfonamidoaryl(alkyl)phosphinsäure-derivate, wie z.B. p-Tolylsulfonamidodiphenylphosphinsäure. Bevorzugt eingesetzt werden Hydrochinon- und Ethylenglykol-bis-(diphenylphosphinsäure)ester und das Bisdiphenylphosphinat des Hydrochinons.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten wie z.B. Verbindungen gemäß Formel II 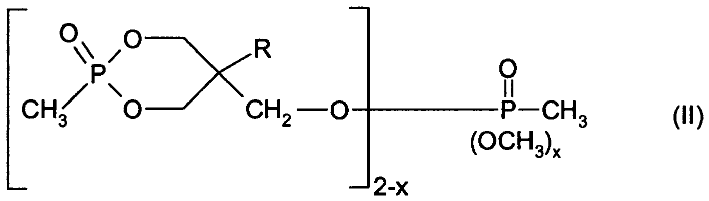 wobei R einen C₁ bis C₄-Alkylrest, bevorzugt Methylrest, x=0 oder 1 bedeutet (Amgard^{®} P 45 der Firma Albright & Wilson).

Ferner ist Phosphor der Wertigkeitsstufe +3 in Triaryl(alkyl)phosphiten, wie z.B. Triphenylphosphit, Tris(4-decylphenyl)phosphit, Tris(2,4-di-tert.-butylphenyl)phosphit oder Phenyldidecylphosphit u.a. enthalten. Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Methylneopentylglycolphosphonat und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenylphosphat, Di(nonyl)phenylphosphat, Phenylmethylhydrogenphosphat, Di(dodecyl)-p-tolylphosphat, p-Tolyl-bis(2,5,5-trimethylhexyl)phosphat oder 2-Ethylhexyldiphenylphosphat. Besonders geeignet sind Phosphorverbindungen, bei denen jeder Rest ein Aryloxi-Rest ist. Ganz besonders geeignet ist Triphenylphosphat und Resorcinol-bis-(diphenylphosphat) und dessen kernsubstituierten Derivate der allgemeinen Formel III (RDP): 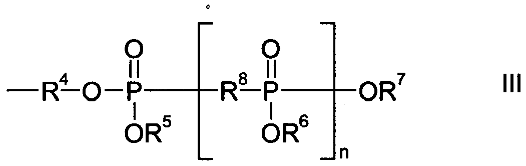 in der die Substituenten in Formel III folgende Bedeutung haben:
- R⁴-R⁷: ein aromatischer Rest mit 6 bis 20 C-Atomen, bevorzugt ein Phenylrest, welcher mit Alkylgruppen mit 1 bis 4 C-Atomen bevorzugt Methyl, substituiert sein kann,
- R⁸: ein zweiwertiger Phenolrest, bevorzugt 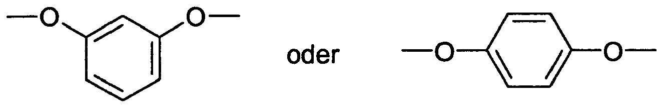
und n einen Durchschnittswert zwischen 0,1 bis 100, bevorzugt 0,5 bis 50, insbesondere 0,8 bis 10 und ganz besonders 1 bis 5.

Die im Handel erhältlichen RPD-Produkte unter dem Warenzeichen Fyroflex^{®} oder Fyrol^{®}-RDP (Akzo) sowie CR 733-S (Daihachi) sind bedingt durch das Herstellungsverfahren Gemische aus ca. 85 % RDP (n=1) mit ca. 2,5 % Triphenylphosphat sowie ca. 12,5 % oligomeren Anteilen, in denen der Oligomerisierungsgrad meist kleiner 10 beträgt.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie beispielsweise in der DE-A 20 36 173 beschrieben ist. Das Molekulargewicht gemessen durch Dampfdruckosmometrie in Dimethylformamid, der Polyphospholinoxide soll im Bereich von 500 bis 7000, vorzugsweise im Bereich von 700 bis 2000 liegen.

Das Phosphor besitzt hierbei die Oxidationsstufe -1.

Ferner können anorganische Koordinationspolymere von Aryl(alkyl)-phosphinsäuren wie z.B. Poly-β-natrium(I)-methylphenylphosphinat eingesetzt werden. Ihre Herstellung wird in DE-A 31 40 520 angegeben. Der Phosphor besitzt die Oxidationszahl +1.

Weiterhin können solche halogenfreien polymeren Phosphorverbindungen durch die Reaktion eines Phosphonsäurechlorids, wie z.B. Phenyl-, Methyl-, Propyl-, Styryl- und Vinylphosphonsäuredichlorid mit bifunktionellen Phenolen, wie z.B. Hydrochinon, Resorcin, 2,3,5-Trimethylhydrochinon, Bisphenol-A, Tetramethylbiphenol-A entstehen.

Weitere flammhemmend wirkenden Verbindungen in Form polymerer Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das anorganische Poly(ammoniumphosphat).

Es können auch oligomere Pentaerythritphosphite, -phosphate und -phosphonate gemäß EP-B 8 486, z.B. Mobil Antiblaze^{®} 19 (eingetragene Marke der Firma Mobil Oil), verwendet werden (s. Formeln IV und V): 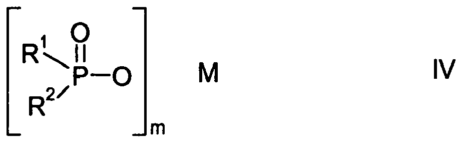 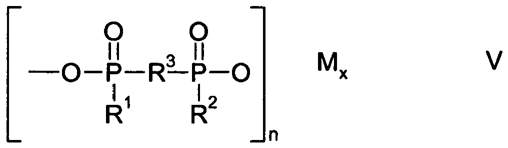 wobei die Substituenten in den Formeln IV und V folgende Bedeutung haben:
- R¹, R²: Wasserstoff, C₁- bis C₆-Alkyl, der gegebenenfalls eine Hydroxylgruppe enthält, vorzugsweise C₁- bis C₄-Alkyl, linear oder verzweigt, z.B. Methyl, Ethyl, n-Propyl, iso-Propyl, n-Butyl, tert.-Butyl, n-Pentyl; Phenyl; wobei bevorzugt mindestens ein Rest R¹ oder R², insbesondere R¹ und R² Wasserstoff ist;
- R³: C₁- bis C₁₀-Alkylen, linear oder verzweigt, z.B. Methylen, Ethylen, n-Propylen, iso-Propylen, n-Butylen, tert.-Butylen, n-Pentylen, n-Octylen, n-Dodecylen; Arylen, z.B. Phenylen, Naphthylen; Alkylarylen, z.B. Methyl-phenylen, Ethyl-phenylen, tert.-Butyl-phenylen, Methyl-naphthylen, Ethyl-naphthylen, tert.-Butyl-naphthylen; Arylalkylen, z.B. Phenyl-methylen, Phenyl-ethylen, Phenyl-propylen, Phenylbutylen;
- M: ein Erdalkali-, Alkalimetall, Al, Zn, Fe, Bor;
- m: eine ganze Zahl von 1 bis 3;
- n: eine ganze Zahl von 1 und 3 und
- x: 1 oder 2.

Besonders bevorzugt sind Verbindungen der Formel IV, in denen R¹ und R² Wasserstoff ist, wobei M vorzugsweise Ca, Zn oder Al ist und Calciumphosphinat als Verbindung ganz besonders bevorzugt ist.

Derartige Produkte sind im Handel z.B. als Calciumphosphinat erhältlich.

Geeignete Salze der Formel IV oder V, in denen nur ein Rest R¹ oder R² Wasserstoff bedeutet, sind z.B. Salze der Phenylphosphinsäure, wobei deren Na- und/oder Ca-Salze bevorzugt sind.

Weiterhin bevorzugte Salze weisen einen hydroxylgruppenhaltigen Alkylrest R¹ und/oder R² auf. Diese sind beispielsweise durch Hydroxymethylierung erhältlich. Bevorzugte Verbindungen sind Ca, Zn und Al-Salze.

Die mittlere Teilchengröße D₅₀ (gemessen nach der bei Komponente B2) beschriebenen Methode) dieser weiteren flammhemmend wirkenden Verbindungen ist vorzugsweise kleiner 10 µm, vorzugsweise kleiner 7 µm und insbesondere kleiner 5 µm.
Der D₁₀-Wert ist vorzugsweise kleiner 4 µm, insbesondere 3 µm und ganz besonders bevorzugt kleiner 2 µm.
Bevorzugte d₉₀-Werte sind kleiner 40 µm und insbesondere kleiner 30 µm und ganz besonders bevorzugt kleiner 20 µm.

Weiterhin bevorzugt sind Phosphorverbindungen der allgemeinen Formel VI: 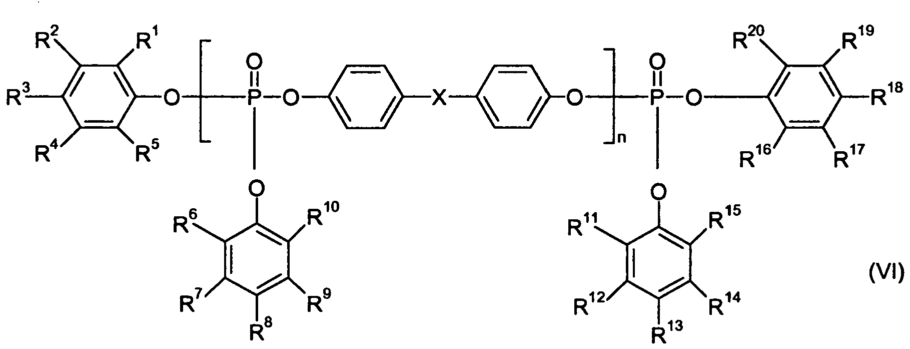 wobei die Substituenten in Formel VI folgende Bedeutung haben:
- R¹ bis R²⁰: unabhängig voneinander Wasserstoff, eine lineare oder verzweigte Alkylgruppe bis zu 6 C-Atomen
- n: einen Durchschnittswert von 0,5 bis 50 und
- X: eine Einfachbindung, C=O, S, SO₂, C(CH₃)₂

Bevorzugte weitere flammhemmend wirkende Verbindungen sind solche der Formel VI, in denen R¹ bis R²⁰ unabhängig voneinander Wasserstoff und/oder einen Methylrest bedeuten. Für den Fall, dass R¹ bis R²⁰ unabhängig voneinander einen Methylrest bedeuten, sind solche Verbindungen bevorzugt, in welchen die Reste R¹, R⁵, R⁶, R¹⁰, R¹¹, R¹⁵, R¹⁶, R²⁰ in ortho Stellung zum Sauerstoff der Phosphatgruppe mindestens einen Methylrest darstellen. Weiterhin bevorzugt sind Verbindungen B2) in denen pro aromatischem Ring eine Methylgruppe, vorzugsweise in ortho-Stellung vorhanden ist und die anderen Reste Wasserstoff bedeuten.

Insbesondere bevorzugt sind als Substituenten SO₂ und S, sowie ganz besonders bevorzugt C(CH₃)₂ für X in obiger Formel (VI).

n beträgt in obiger Formel (VI) vorzugsweise als Durchschnittswert 0,5 bis 5, insbesondere 0,7 bis 2 und insbesondere ≈ 1.

Die Angabe von n als Durchschnittswert ergibt sich durch das Herstellverfahren der oben aufgeführten Verbindungen, so dass der Oligomerisierungsgrad meist kleiner 10 beträgt und geringe Anteile (meist < 5 Gew.-%) an Triphenylphosphat enthalten sind, wobei dies von Charge zu Charge unterschiedlich ist. Solche Verbindungen sind als CR - 741 der Firma Daihachi im Handel erhältlich.

### Komponente C):

Die thermoplastischen Formmassen können ein oder mehrere - von den Komponenten A) und B) verschiedene - Zusatzstoffe als Komponente C) enthalten. Geeignet sind grundsätzlich alle dem Fachmann bekannten und in der Literatur beschriebenen kunststoffüblichen Zusatzstoffe. Kunststoffübliche Zusatzstoffe im Sinne der vorliegenden Erfindung sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher sowie Fasern, beispielsweise Glasfasern oder Kohlenstofffasern.

Oxidationsverzögerer und Wärmestabilisatoren, die der thermoplastischen Formmasse gemäß der Erfindung zugesetzt werden können, sind z. B. Halogenide von Metallen der Gruppe I des Periodensystems, z. B. Natrium-, Kalium-, Lithium-Halogenide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der thermoplastischen Formmassen, einsetzbar.

Beispiele für UV-Stabilisatoren sind verschiedene substituierte Resorcine, Salicylate, Benzotriazole und Benzophenone, die im Allgemeinen in Mengen bis zu 2 Gew.-%, bezogen auf das Gewicht der thermoplastischen Formmassen, eingesetzt werden. Gleit- und Entformungsmittel, die in der Regel in Mengen bis zu 1 Gew.-%, bezogen auf das Gewicht der thermoplastischen Formmassen, zugesetzt werden können, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z. B. Distearylketon, eingesetzt werden. Erfindungsgemäß geeignet sind insbesondere Zink-, Magnesium- und Calciumstearat sowie N,N'-Ethylen-bis-stearamid.

Als Glasfasern können in den erfindungsgemäßen Formmassen alle dem Fachmann bekannten und in der Literatur beschriebenen Glasfasern eingesetzt werden (siehe beispielsweise Milewski, J.V., Katz, H.S. "Handbook of Reinforcements for Plastics", S. 233 ff., Van Nostrand Reinholt Company Inc, 1987).

### Herstellverfahren:

Die erfindungsgemäßen thermoplastischen Formmassen können nach an sich bekannten Verfahren hergestellt werden, in dem man die Ausgangskomponenten in üblichen Vorrichtungen und nach üblichen Verfahren mischt. Geeignete Mischvorrichtungen sind beispielsweise Schneckenextrudern, Brabender-Mühlen oder Banbury-Mühlen. Nach der Mischung kann sich z.B. eine Extrusion anschließen. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 120 bis 280°C.

Die erfindungsgemäßen thermoplastischen Formmassen weisen gegenüber mit bekannten halogenfreien bzw. halogenarmen Flammschutzmittelkombinationen versehenen Formmassen verbesserte flammhemmende und/oder mechanische Eigenschaften auf.

Die erfindungsgemäßen Formmassen eignen sich zur Herstellung von Fasern, Folien Formkörpern und Schäumen jeglicher Art. Fasern, Folien Formkörper und Schäume enthaltend die erfindungsgemäßen Formmassen sind beispielsweise einsetzbar als Haushaltsartikel, elektronische Bauteile, medizinische Geräte, Kfz-Bauteile und Baumaterialien.

Die Erfindung wird nachstehend anhand von Beispielen näher erläutert.

### Beispiele:

### Meßmethoden:

### Nachbrennzeiten t1 [s]:

Im Brandtest in Anlehnung an UL 94, vertical burning standard, wurde an Stäben mit einer Dicke von 1,6 mm nach einer ersten Beflammungsdauer von 10 Sekunden die Nachbrennzeit t1 gemessen. Nach einer sich an das Verlöschen der Flammen direkt anschließenden Wartezeit von zwei Sekunden und einer zweiten Beflammungsdauer von 10 Sekunden wurde die zweite Nachbrennzeit t2 gemessen. Die Summe der Nachbrennzeiten t1 und t2 ergibt die Nachbrennzeit t_{N}.

### Einsatzstoffe

Komponenten oder Versuche mit vorangestelltem "V-" sind nicht erfindungsgemäß und dienen zum Vergleich.

### Thermoplastisches Polymer A):

Als Komponenten A) wurde eingesetzt:
a-I: ein handelsübliches Acrylnitril-Butadien-Styrol-Copolymer (ABS), Terluran^{®} HI10 der BASF SE.
a-II: ein Styrol-Acrylnitril-Copolymer (SAN) enthaltend 34 Gew.-% Acrylnitril und 66 Gew.-% Styrol mit einer Viskositätszahl von 79 ml/g.

### Flammschutzmittelkomponente B):

Als Komponente B1) wurde eingesetzt:
b1-I: Verbindung der Formel (I),

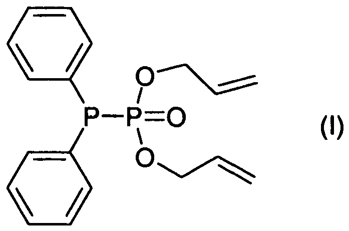

Als Komponente B2) wurde eingesetzt:
b2-I: Blähgraphit Nord-Min^{®} 503 der Firma Nordmann, Rassmann, GmbH.

Als Komponente B3) wurde eingesetzt:
b3-I: Polytetrafluorethylen PTFE TE-3893, Teflon^{®} Dispersion der Fa. C. H. Erbslöh.

Als Vergleichskomponente V-B) wurde eingesetzt:
V-b-I: Disflammol^{®} TP, ein Triphenylphosphat der Lanxess Aktiengesellschaft.

### Herstellung der Formmassen und Formkörper sowie deren Prüfung:

Zur Bestimmung der in Tabelle 1 genannten Brandeigenschaften wurden die Komponenten A) bis B) (jeweilige Gew.-teile s. Tabelle 1) homogenisiert und zu Prüfkörpern gemäß UL 94, vertical burning standard, mit einer Dicken von 1,6 mm extrudiert.

**Tabelle 1: Zusammensetzung und Eigenschaften der Formmassen (vorangestelltes V: zum Vergleich)**

| Beispiel | V-1 | V-2 | V-3 | 4 | 5 |
|---|---|---|---|---|---|
| Zusammensetzung [Gew.-teile] | | | | | |
| a-I | 22,6 | 22,6 | 22,6 | 22,6 | 22,6 |
| a-II | 67 | 59 | 55 | 59 | 55 |
| b1-I | - | - | - | 8 | 12 |
| b2-I | 10 | 10 | 10 | 10 | 10 |
| b3-I* | 0,4 | 0,4 | 0,4 | 0,4 | 0,4 |
| V-b-I | - | 8 | 12 | - | - |
| Eigenschaften | | | | | |
| Nachbrennzeit** t_{N} [s] | > 50 | > 50 | 26,1 | 12,3 | 3,1 |

| | | | | | |
|---|---|---|---|---|---|
| * gerechnet als Feststoff ** Mittelwert aus 2 Einzelmessungen | | | | | |

Die Beispiele belegen, daß die erfindungsgemäßen thermoplastischen Formmassen gegenüber mit bekannten halogenfreien bzw. halogenarmen Flammschutzmittelkombinationen versehenen Formmassen verbesserte flammhemmende und/oder mechanische Eigenschaften aufweisen.

## Patentansprüche

1. Thermoplastische Formmassen enthaltend
A) 39 bis 99 Gew.-% mindestens eines thermoplastischen Polymers,
B) 1 bis 60 Gew.-% einer Flammschutzmittelkomponente enthaltend
20 bis 79,99 Gew.-% der Komponente B1) eine Verbindung der Formel (I), 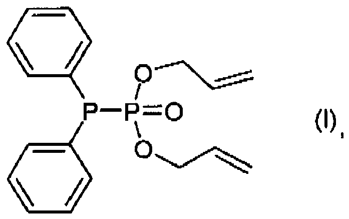
20 bis 79,99 Gew.-% der Komponente B2) eines expandierbaren Graphits und
0,01 bis 4 Gew.-% der Komponente B3) eines fluorhaltigen Polymers
wobei die Gewichtsprozente jeweils auf das Gesamtgewicht der Komponenten B1) bis B3) bezogen sind und zusammen 100 Gew.-% ergeben.
und
C) 0 bis 60 Gew.-% weiterer Zusatzstoffe,
wobei die Gewichtsprozente jeweils auf das Gesamtgewicht der Komponenten A) bis C) bezogen sind und zusammen 100 Gew.-% ergeben.

2. Thermoplastische Formmassen nach Anspruch 1 enthaltend
50 bis 95 Gew.-% der Komponente A),
5 bis 40 Gew.-% der Komponente B) und
0 bis 45 Gew.-% der Komponente C),
wobei die Gewichtsprozente jeweils auf das Gesamtgewicht der Komponenten A) bis C) bezogen sind und zusammen 100 Gew.-% ergeben.

3. Thermoplastische Formmassen nach den Ansprüchen 1 bis 2, enthaltend als Komponente B3) ein fluoriertes Ethylenpolymerisat.

4. Thermoplastische Formmassen nach den Ansprüchen 1 bis 3, enthaltend als Komponente A) Polyethylen (PE), Polypropylen (PP), Polyvinylchlorid (PVC), Polystyrol (PS), schlagfest modifiziertes Polystyrol (HIPS), Styrol-Acrylnitril-Copolymere (SAN), Acrylnitril-Styrol-Acrylat-Copolymere (ASA), Acrylnitril-Butadien-Styrol-Copolymere (ABS), Methacrylat-Acrylnitril-Butadien-StyrolCopolymere (MABS), Styrol-Butadien-Blockcopolymere (SBC), Polyamid (PA), Polyethylenterephthalat (PET), Polyethylenterephthalatglycol (PETG), Polybutylenterephthalat (PBT), Polyoxymethylen (POM), Polycarbonat (PC), Polymethylmethacrylat (PMMA), Poly(ether)sulfone (PES), thermoplastisch verarbeitbares Polyurethan (TPU), Polyphenylenoxid (PPO), schäumbares und/oder geschäumtes Polystyrol (EPS), schäumbares und/oder geschäumtes Polypropylen oder eine Mischung aus zwei oder mehreren dieser Polymere.

5. Verfahren zur Herstellung der thermoplastischen Formmassen gemäß den Ansprüchen 1 bis 4, **dadurch gekennzeichnet, dass** die Komponenten A), B) und gegebenenfalls C) miteinander gemischt werden.

6. Verwendung der Verbindung der Formel (I) 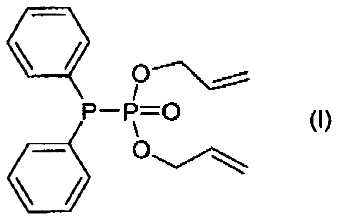 als Flammschutzmittel für thermoplastische Polymere A).

7. Verwendung gemäß Anspruch 6, wobei das thermoplastische Polymer A) schäumbares und/oder geschäumtes Polypropylen ist.

8. Fasern, Folien, Formkörper und Schäume erhältlich aus den thermoplastischen Formmassen gemäß den Ansprüchen 1 bis 4.

## Claims

1. Thermoplastic moulding compositions, comprising
A) from 39 to 99% by weight of at least one thermoplastic polymer,
B) from 1 to 60% by weight of a flame-retardant component, comprising
from 20 to 79.99% by weight of component B1), a compound of formula (I), 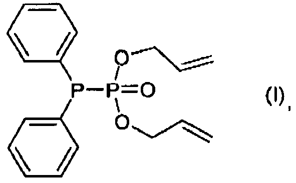 from 20 to 79.99% by weight of component B2), an expandable graphite, and
from 0.01 to 4% by weight of component B3), a fluorine-containing polymer,
where each of the percentages by weight is based on the total weight of components B1) to B3) and these give a total of 100% by weight,
and
C) from 0 to 60% by weight of further additives,
where each of the percentages by weight is based on the total weight of components A) to C) and these give a total of 100% by weight.

2. The thermoplastic moulding compositions according to claim 1, comprising
from 50 to 95% by weight of component A),
from 5 to 40% by weight of component B) and
from 0 to 45% by weight of component C),
where each of the percentages by weight is based on the total weight of components A) to C) and these give a total of 100% by weight.

3. The thermoplastic moulding compositions according to claims 1 to 2, comprising as component B3), a fluorinated ethylene polymer.

4. The thermoplastic moulding compositions according to claims 1 to 3, comprising as component A), polyethylene (PE), polypropylene (PP), polyvinyl chloride (PVC), polystyrene (PS), impact-resistant modified polystyrene (HIPS), styreneacrylonitrile copolymers (SAN), acrylonitrile-styrene-acrylate copolymers (ASA), acrylonitrile-butadiene-styrene copolymers (ABS), methacrylate-acrylonitrile-butadiene-styrene copolymers (MABS), styrene-butadiene block copolymers (SBC), polyamide (PA), polyethylene terephthalate (PET), polyethylene terephthalate glycol (PETG), polybutylene terephthalate (PBT), polyoxymethylene (POM), polycarbonate (PC), polymethyl methacrylate (PMMA), poly(ether)sulfones (PES), thermoplastically processable polyurethane (TPU), polyphenylenoxide (PPO), foamable and/or foamed polystyrene (EPS), foamable and/or foamed polypropylene or a mixture of two or more of these polymers.

5. A process for the preparation of the thermoplastic moulding compositions according to claims 1 to 4, **characterized in that** the components A), B) and, optionally, C) are mixed with one another.

6. The use of the compound of formula (I), 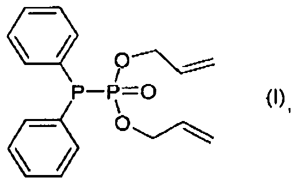 as flame retardant for thermoplastic polymers A).

7. The use according to claim 6, wherein the thermoplastic polymer A) is a foamable and/or foamed polypropylene.

8. Fibers, foils, mouldings and foams obtainable from the thermoplastic moulding compositions according to claims 1 to 4.

## Revendications

1. Mélanges à mouler thermoplastiques, contenant
A) 39 à 99 % en poids d'au moins un polymère thermoplastique,
B) 1 à 60 % en poids d'un composant retardateur de flamme, contenant
20 à 79,99 % en poids du composant B1) un composé de formule (I) 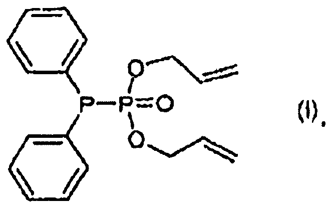 20 à 79,99 % en poids du composant B2) d'un graphite expansible, et
0,01 à 4 % en poids du composant B3) d'un polymère fluoré,
chacun des pourcentages en poids étant rapporté au poids total des composants B1) à B3), leur somme faisant 100 % en poids, et
C) 0 à 60 % en poids d'autres additifs,
chacun des pourcentages en poids étant rapporté au poids total des composants A) à C), leur somme faisant 100 % en poids.

2. Mélanges à mouler thermoplastiques selon la revendication 1, contenant
50 à 95 % en poids du composant A),
5 à 40 % en poids du composant B), et
0 à 45 % en poids du composant C),
chacun des pourcentages en poids étant rapporté au poids total des composants A) à C), leur somme faisant 100 % en poids.

3. Mélanges à mouler thermoplastiques selon les revendications 1 à 2, contenant en tant que composant B3) un polymère de l'éthylène fluoré.

4. Mélanges à mouler thermoplastiques selon les revendications 1 à 3, contenant en tant que composant A) du polyéthylène (PE), du polypropylène (PP), du poly(chlorure de vinyle) (PVC), du polystyrène (PS), du polystyrène modifié choc (HIPS), des copolymères acrylonitrile-styrène-acrylate (ASA), des copolymères acrylonitrile-butadiène-styrène (ABS), des copolymères méthacrylate-acrylonitrile-butadiène-styrène (MABS), des copolymères à blocs styrène-butadiène (SBC), du polyamide (PA), du poly(téréphtalate d'éthylène) (PET), du poly(téréphtalate d'éthylène)glycol (PETG), du poly(téréphtalate de butylène) (PBT), du polyoxyméthylène (POM), du polycarbonate (PC), du poly(méthacrylate de méthyle) (PMMA), des poly(éther)sulfones (PES), du polyuréthanne pouvant subir une transformation thermoplastique (TPU), du poly(oxyde de phénylène) (PPO), du polystyrène expansible et/ou expansé (EPS), du polypropylène expansible et/ou expansé, ou d'un mélange de deux ou plusieurs de ces polymères.

5. Procédé de préparation des mélanges à mouler thermoplastiques selon les revendications 1 à 4, **caractérisé en ce qu'**on mélange les uns aux autres les composants A), B) et éventuellement C).

6. Utilisation du composé de formule (I) 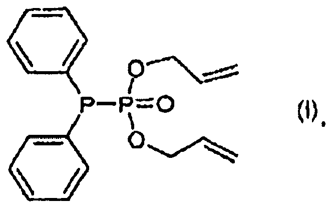 en tant qu'agent retardateur de flamme pour des polymères thermoplastiques A).

7. Utilisation selon la revendication 6, pour laquelle le polymère thermoplastique A) est un polypropylène expansible et/ou expansé.

8. Fibres, feuilles, objets moulés et mousses pouvant être obtenus à partir des mélanges à mouler thermoplastiques selon les revendications 1 à 4.
